# EUROPÄISCHE PATENTANMELDUNG

(11) **EP 1 240 826 A2**
(43) Veröffentlichungstag der Anmeldung: **18.09.2002**
(21) Anmeldenummer: 02005954.9
(22) Anmeldetag: 15.03.2002
(51) Int. Cl.: A01M 7/00

(54) **Sprühvorrichtung**

(30) Priorität: 15.03.2001 DE 10113075
(71) Anmelder: Wissler, Erhard, 73266 Bissingen/Teck (DE)
(72) Erfinder: Müller, Norbert, 72116 Mössingen (DE)
(74) Vertreter: Patentanwälte Ruff, Wilhelm, Beier, Dauster & Partner

(57) **Zusammenfassung**

1. Sprühvorrichtung für die Landwirtschaft.
2.1. Die Erfindung betrifft eine Sprühvorrichtung zum Ausbringen flüssiger Medien für die Landwirtschaft mit einer Flüssigkeitspumpe, einer von der Flüssigkeitspumpe ausgehenden Druckleitung, mehreren in Teilbreiten angeordneten Sprühdüsen, wobei jeder Teilbreite der Sprühdüsen wenigstens ein erstes Schaltventil zum Verbinden der Sprühdüsen der Druckleitung zugeordnet ist, einem Zirkulationskreislauf und wenigstens einem zweiten Schaltventil zum Umschalten der Sprühvorrichtung vom Sprühbetrieb in den Zirkulationsbetrieb.
2.2. Erfindungsgemäß ist jedem ersten Schaltventil eines der zweiten Schaltventile zugeordnet und jedes erste Schaltventil und das jeweilige zugeordnete zweite Schaltventil sind mittels einer gemeinsamen Ventilstange synchron betätigbar.
2.3. Verwendung z.B. für Feldspritzen in der Landwirtschaft.

## Beschreibung

Die Erfindung bezieht sich auf eine Sprühvorrichtung, die insbesondere in der Spritztechnik im landwirtschaftlichen Bereich eingesetzt wird. Die Erfindung betrifft eine Sprühvorrichtung zum Ausbringen flüssiger Medien für die Landwirtschaft mit einer Flüssigkeitspumpe, einer von der Flüssigkeitspumpe ausgehenden Druckleitung, mehreren, in Teilbreiten angeordneten Sprühdüsen, wobei jeder Teilbreite der Sprühdüsen wenigstens ein erstes Schaltventil zum Verbinden der Sprühdüsen mit der Druckleitung zugeordnet ist, einem Zirkulationskreislauf und wenigstens einem zweiten Schaltventil zum Umschalten der Sprühvorrichtung vom Sprühbetrieb in den Zirkulationsbetrieb.

Landwirtschaftliche Geräte zum Ausbringen von flüssigen Stoffen, insbesondere Pflanzenschutzmitteln oder Flüssigdünger, bestehen aus einem Flüssigkeitstank, einer Flüssigkeitspumpe, die über eine Saugleitung mit dem Flüssigkeitstank verbunden ist, und einer Druckleitung, durch die die Flüssigkeit zu einer Dosierarmatur und den Spritzdüsen gefördert wird. Da es sich bei den auszubringenden Flüssigkeiten selten um reine Lösungen handelt, sondern beispielsweise um Suspensionen, besteht die Gefahr des Sedimentierens. Dies kann zu Funktionsstörungen des Betriebs der Sprühvorrichtung führen.

Nach Beendigung der Applikation oder beispielsweise vor dem Wechsel der auszubringenden Flüssigkeit, ist eine Reinigung der Sprühvorrichtung notwendig. Viele auf dem Markt befindlichen Sprühvorrichtungen werden durch ein Durchspülen der Leitungen und anschließendes Ausbringen der Reinigungsflüssigkeit auf dem Feld gereinigt.

Aus der europäischen Patentschrift EP 0 820 224 B1, deren deutsche Übersetzung unter DE 696 01 461 T2 veröffentlicht ist, ist eine Sprühvorrichtung bekannt, die zum Ausbringen flüssiger Medien für die Landtechnik geeignet ist und bei der ein sogenannter Zirkulationsbetrieb eingestellt werden kann, bei dem eine Flüssigkeit im System zirkuliert, jedoch nicht versprüht wird. Die dort gezeigte Sprühvorrichtung weist eine Flüssigkeitspumpe, eine von der Flüssigkeitspumpe ausgehende Druckleitung, in Teilbreiten angeordnete Sprühdüsen, wobei jeder Teilbreite der Sprühdüsen jeweils ein erstes Schaltventil zum Verbinden der Sprühdüsen der Teilbreite mit der Druckleitung zugeordnet ist, einen Zirkulationskreislauf und ein zentrales zweites Schaltventil zum Umschalten der Sprühvorrichtung vom Sprühbetrieb in den Zirkulationsbetrieb auf. Zum Umschalten vom Sprühbetrieb in den Zirkulationsbetrieb wird mittels des zweiten Schaltventils die von der Flüssigkeitspumpe in die Druckleitung geförderte Flüssigkeit noch vor einer Verzweigung der Druckleitung zu den Sprühdüsen der einzelnen Teilbreiten in eine Zirkulationsleitung umgelenkt. Die Zirkulationsleitung führt zu einer Venturidüse und stromabwärts der Venturidüse in einen Flüssigkeitstank. Mittels der Venturidüse wird der für das Spülen oder den Zirkulationsbetrieb notwendige Unterdruck erzeugt. Erste Saugleitungen sind einerseits an die Unterdruckseite der Venturidüse angeschlossen und andererseits mit einem jeweiligen ersten Schaltventil verbunden. In Bezug auf den Sprühbetrieb befindet sich das erste Schaltventil stromaufwärts der Sprühdüsen der jeweiligen Teilbreite. Zweite Saugleitungen sind jeweils mittels eines Rückschlagventils an die Sprühdüsen jeder Teilbreite angeschlossen, wobei die zweiten Saugleitungen in Bezug auf den Sprühbetrieb stromabwärts der Sprühdüsen der jeweiligen Teilbreite angeschlossen sind. Die zweiten Saugleitungen sind mit dem Flüssigkeitstank verbunden. Durch den im Zirkulationsbetrieb von der Venturidüse erzeugten Unterdruck wird Flüssigkeit aus dem Tank durch die zweiten Saugleitungen, vorbei an den Sprühdüsen, über die ersten Schaltventile, über die ersten Saugleitungen zur Venturidüse und in den Tank gesaugt. Ein Frischwassertank kann mittels eines weiteren steuerbaren Schaltventils mit den zweiten Saugleitungen verbunden werden. Auf diese Weise ist es möglich, das System mit Frischwasser zu spülen. Jeder Teilbreite von Sprühdüsen ist eine zweite Saugleitung sowie eine erste Saugleitung zugeordnet. An der Venturidüse sind alle ersten Saugleitungen zusammengefasst. Bei der dort gezeigten Vorrichtung kann somit nur das gesamte System gespült werden.

Mit der Erfindung soll eine Sprühvorrichtung für die Landwirtschaft angegeben werden, die flexibel einsetzbar ist und einen einfach zu realisierenden Aufbau aufweist.

Erfindungsgemäß ist hierzu eine Sprühvorrichtung zum Ausbringen flüssiger Medien für die Landwirtschaft mit einer Flüssigkeitspumpe, einer von der Flüssigkeitspumpe ausgehenden Druckleitung, mehreren in Teilbreiten angeordneten Sprühdüsen, wobei jeder Teilbreite der Sprühdüsen wenigstens ein erstes Schaltventil zum Verbinden der Sprühdüsen mit der Druckleitung zugeordnet ist, einem Zirkulationskreislauf und wenigstens einem zweiten Schaltventil zum Umschalten der Sprühvorrichtung vom Sprühbetrieb in den Zirkulationsbetrieb, bei der jedem ersten Schaltventil eines der zweiten Schaltventile zugeordnet ist und jedes erste Schaltventil und das jeweilige zugeordnete zweite Schaltventil mittels einer gemeinsamen Ventilstange synchron betätigbar sind.

Indem jedem ersten Schaltventil eines der zweiten Schaltventile zugeordnet ist, wird eine Flüssigkeitszirkulation auch in einzelnen Teilbreiten möglich, da das Umschalten in den Zirkulationsbetrieb und das Freigeben des Zirkulationskreislaufs durch die zweiten Schaltventile für jede Teilbreite gesondert erfolgt. Durch das zweite Schaltventil wird der Zirkulationskreislauf beim Umschalten in den Zirkulationsbetrieb freigegeben. Da die Sprühdüsen in Teilbreiten angeordnet sind und jeder Teilbreite der Sprühdüsen ein erstes Schaltventil zugeordnet ist, können dadurch entsprechend den Erfordernissen gerade nicht benutzte Teilbreiten in den Zirkulationsbetrieb geschaltet werden, wohingegen andere Teilbreiten noch im Sprühbetrieb gefahren werden. Dadurch ist die Sprühvorrichtung flexibel einsetzbar. Indem jedes erste Schaltventil und das jeweilige zugeordnete zweite Schaltventil mittels einer gemeinsamen Ventilstange synchron betätigbar sind, wird ein einfach zu realisierender Aufbau erreicht, da das erste Schaltventil und das jeweilige zugeordnete zweite Schaltventil gemeinsam angesteuert werden können.

In Weiterbildung der Erfindung sind jedes erste Schaltventil und das jeweilige zugeordnete zweite Schaltventil zu einem Teilbreitenventil mit einem gemeinsamen Gehäuse verbunden, wobei sich die gemeinsame Ventilstange wenigstens abschnittsweise durch das Gehäuse erstreckt und mit Absperrelementen versehen ist, die in passende Sitze in dem Gehäuse eingreifen können.

Durch ein gemeinsames Gehäuse für das erste Schaltventil und das zweite Schaltventil wird ein kompakter Aufbau geschaffen.

Durch die Verbindung mindestens zweier Ventile und deren synchrone Betätigung über die Ventilstange, an der Kugeln, Teller, Membranen oder dergleichen angeordnet sind, wird eine Flüssigkeitszirkulation auch in einzelnen Teilbreiten, blockweise oder dergleichen oder bei kompletter Abschaltung möglich. Aufgrund der Bauform sind auch schon vorhandene Geräte nachrüstbar.

Je nach Ausführung kann die Ventilstange verlängert sein, und an ihr können entsprechend mehr Kugeln, Teller, Membranen oder dergleichen angeordnet sein, so dass auch drei oder mehr Ventile synchron angesteuert werden.

Je nach Ausführung ist die Zirkulation im Ringspülsystem gleichläufig oder gegenläufig mit der bei der Ausbringung strömenden Flüssigkeit. Als förderndes Mittel dient bevorzugt eine Venturi-Düse, eine Pumpe oder dergleichen.

Je nach Ausführung kann die Ringspülung oder der Zirkulationsbetrieb durch Unterdruck oder durch Überdruck ermöglicht sein.

Je nach Ausführung erfolgt eine Regelung elektromagnetisch, elektromotorisch oder pneumatisch, wobei bei Verzicht auf die pneumatische Regelung der Einsatzbereich und/oder das Einsatzgebiet größer wird, da die erfindungsgemäßen Sprühvorrichtungen im allgemeinen als sogenannte Feldspritzen für die Montage an einem Traktor vorgesehen sind. Traktoren sind nicht durchgängig mit Pneumatiksystemen ausgerüstet.

Je nach Ausführung ist das zwischen den Düsen und dem Tank angebrachte Rückschlagventil durch ein von außen gesteuertes Ventil ersetzt.

Mit der vorgeschlagenen erfindungsgemäßen Sprühvorrichtung wird eine pneumatische Regelung, beispielsweise ein Ramsay-Ventil, überflüssig. Mit der erfindungsgemäßen Sprühvorrichtung wird ein Nachtropfen der Düsen verhindert.

In Weiterbildung der Erfindung weist das Gehäuse eine Druckkammer, an die eine Druckleitung angeschlossen ist, und eine Sammelkammer auf, an die eine Zirkulationsleitung angeschlossen ist, wobei mittels eines zweiten Absperrelements eine Verbindung von der Druckkammer zu den Sprühdüsen geschlossen bzw. geöffnet werden kann und mittels eines dritten Absperrelements eine Verbindung von der Sammelkammer zu den Sprühdüsen geöffnet bzw. geschlossen werden kann.

In Weiterbildung der Erfindung kann mittels eines ersten Absperrelements eine Verbindung von der Druckkammer zu einem Flüssigkeitstank oder der Zirkulationsleitung geöffnet bzw. geschlossen werden.

Durch Vorsehen von zwei oder drei Absperrelementen an einer gemeinsamen Ventilstange kann mittels eines einzelnen Aktors eine Umschaltung vom Sprühbetrieb in den Zirkulationsbetrieb erfolgen. Infolgedessen ergibt sich ein geringer Steuerungsaufwand. Die Funktion des ersten Schaltventils wird von dem ersten und/oder dem zweiten Absperrelement, die des zweiten Schaltventils von dem dritten Absperrelement übernommen.

In Weiterbildung der Erfindung ist in Bezug auf eine Strömungsrichtung im Sprühbetrieb stromabwärts der Sprühdüsen eine Rücklaufleitung einerseits mit den Sprühdüsen und andererseits mit einem Flüssigkeitstank oder Mitteln zum Erzeugen eines Unterdrucks, insbesondere einer Saugseite der Flüssigkeitspumpe, verbunden. In der Rücklaufleitung können steuerbare Absperrmittel vorgesehen sein.

Als steuerbare Absperrmittel können beispielsweise Rückschlagventile oder elektrisch bzw. pneumatisch schaltbare Ventile vorgesehen sein. Die Rücklaufleitung ermöglicht es, im Zirkulationsbetrieb Flüssigkeit an den Sprühdüsen vorbeizuführen und dadurch eine Verstopfung der Düsen durch Ablagerungen zu vermeiden. Die Rücklaufleitung kann, je nach Ausführungsform der Erfindung, im Zirkulationsbetrieb mit Unterdruck, als sogenannte Rücksaugleitung, oder mit Überdruck beaufschlagt werden. Darüber hinaus kann durch den Zirkulationsbetrieb sichergestellt werden, dass sich bereits bei Sprühbeginn eine auszubringende Flüssigkeit oder Chemikalie gleichmäßig im System verteilt hat.

In Weiterbildung der Erfindung weist der Zirkulationskreislauf die Rücklaufleitung und wenigstens einen Abschnitt der Druckleitung zwischen Teilbreitenventil und Sprühdüsen auf. Der Zirkulationskreislauf kann weiterhin die Druckleitung zwischen Flüssigkeitspumpe und Teilbreitenventil aufweisen.

Durch diese Maßnahmen werden alle im Sprühbetrieb genutzten Leitungen im Zirkulationsbetrieb durchspült. Dadurch werden Ablagerungen zuverlässig verhindert und darüber hinaus sind nur wenige zusätzliche Leitungen erforderlich, um ein konventionelles System so umzurüsten, dass ein Zirkulationsbetrieb möglich ist. Eine Strömungsrichtung der flüssigen Medien im Bereich der Sprühdüsen kann zwischen Sprühbetrieb und Zirkulationsbetrieb gleichläufig oder gegenläufig sein, wodurch, je nach Ausführungsform, ein zum Sprühbetrieb gleichläufiger oder gegenläufiger Zirkulationsbetrieb realisierbar ist.

In Weiterbildung der Erfindung sind im Zirkulationskreislauf Drosselmittel vorgesehen, um einen Flüssigkeitsdruck im Zirkulationsbetrieb unter einen Öffnungsdruck der Sprühdüsen abzusenken.

Gemäß einer bevorzugten Ausführungsform der Erfindung ist vorgesehen, dass der Zirkulationskreislauf eine Zirkulationsleitung aufweist, die einerseits mit Mitteln zum Erzeugen eines Unterdrucks, insbesondere einer Saugseite der Flüssigkeitspumpe, und andererseits mit dem zweiten Schaltventil verbunden ist und mittels des zweiten Schaltventils wahlweise absperrbar oder mit den Sprühdüsen verbindbar ist, wobei zwischen den Sprühdüsen und einem Flüssigkeitstank eine Rücklaufleitung sowie steuerbare Absperrmittel vorgesehen sind.

Durch diese Maßnahmen wird ein zum Sprühbetrieb gegenläufiger Zirkulationsbetrieb ermöglicht, bei dem auch einzelne Teilbreiten in den Zirkulationsbetrieb umgeschaltet werden können. Aufgrund des gegenläufigen Zirkulationsbetriebs kann als steuerbares Absperrmittel ein einfaches Rückschlagventil eingesetzt werden. Die Rücklaufleitungen aller Teilbreiten können in eine Sammelleitung münden, in der dann ein gemeinsames Rückschlagventil vorgesehen ist.

In Weiterbildung der Erfindung ist mittels des ersten Schaltventils die Druckleitung wahlweise mit einem mit dem Flüssigkeitstank verbundenen Gleichdruckkanal oder den Sprühdüsen verbindbar.

Im Zirkulationsbetrieb gelangt Flüssigkeit von der Druckleitung somit wieder zum Flüssigkeitstank. Im Zirkulationsbetrieb wird bei dieser Ausführungsform der Erfindung Flüssigkeit von der Flüssigkeitspumpe befördert, gelangt in eine Druckkammer des Abschnitts des Teilbreitenventils, der dem ersten Schaltventil entspricht, von der Druckkammer in den Gleichdruckkanal und von ihr aus in den Flüssigkeitstank. Der Gleichdruckkanal muss nicht notwendigerweise mit einer Drossel versehen sein und dient dann als Sammelkanal. Darüber hinaus wird aus der Zirkulationsleitung, die mit der Saugseite der Flüssigkeitspumpe verbunden ist, Flüssigkeit abgesaugt. Da die Zirkulationsleitung andererseits mit der Sammelkammer und dem Abschnitt des Teilbreitenventils, der dem zweiten Schaltventil entspricht, verbunden ist, das im Zirkulationsbetrieb die Verbindung zwischen der Sammelkammer und den Sprühdüsen herstellt, wird im Zirkulationsbetrieb Flüssigkeit aus dem Flüssigkeitstank in die Rücklaufleitung, vorbei an den geöffneten steuerbaren Absperrmitteln, vorbei an den Sprühdüsen, durch die Sammelkammer, die Zirkulationsleitung und wieder zur Flüssigkeitspumpe gesaugt. Ein Spülflüssigkeitstank kann beispielsweise mittels eines steuerbaren Schaltventils mit der Rücklaufleitung zwischen dem Flüssigkeitstank und den Sprühdüsen verbunden werden. Im Zirkulationsbetrieb wird dadurch Spülflüssigkeit, beispielsweise Frischwasser, in das System gesaugt.

Gemäß einer weiteren bevorzugten Ausführungsform der Erfindung weist der Zirkulationskreislauf eine Zirkulationsleitung auf, die einerseits mit dem ersten Schaltventil und andererseits mit dem zweiten Schaltventil verbunden ist, wobei mittels des ersten Schaltventils eine Verbindung zwischen der Druckleitung und der Zirkulationsleitung geöffnet bzw. geschlossen werden kann und mittels des zweiten Schaltventils eine Verbindung zwischen der Zirkulationsleitung und den Sprühdüsen geöffnet bzw. geschlossen werden kann und wobei zwischen den Sprühdüsen und einem Flüssigkeitstank eine Rücksaugleitung sowie steuerbare Absperrmittel vorgesehen sind.

Bei dieser bevorzugten Ausführungsform ist ein Zirkulationsbetrieb realisiert, bei dem die Flüssigkeit gleichläufig zum Sprühbetrieb zirkuliert. Wesentlich ist, dass die Flüssigkeit im Zirkulationsbetrieb durch das System nicht gesaugt sondern gedrückt wird. Dies ist deshalb möglich, da die Sprühdüsen mit einer sogenannten Tropfstoppmembrane versehen sind, die die Sprühdüsen unterhalb eines vorbestimmten Leitungsdrucks geschlossen hält.

In Weiterbildung der Erfindung ist mittels des ersten Schaltventils die Druckleitung wahlweise mit der Zirkulationsleitung oder den Sprühdüsen verbindbar.

Während des Zirkulationsbetriebs wird die Flüssigkeit somit durch die Flüssigkeitspumpe aus dem Flüssigkeitstank angesaugt, über die Druckleitung in die Druckkammer befördert, gelangt von dort aus in die Zirkulationsleitung und die Sammelkammer und schließlich zu den Sprühdüsen. Von den Sprühdüsen aus passiert die Flüssigkeit im Zirkulationsbetrieb das geöffnete, steuerbare Absperrmittel in der Rücklaufleitung und gelangt über die Rücklaufleitung schließlich wieder in den Flüssigkeitstank.

In der Zirkulationsleitung sind vorteilhafterweise Drosselmittel vorgesehen, um im Zirkulationsbetrieb einen Flüssigkeitsdruck im Zirkulationskreislauf unter einen Öffnungsdruck der Sprühdüsen abzusenken.

Auf diese Weise ist sichergestellt, dass die Sprühdüsen im Zirkulationsbetrieb nicht tropfen. Ein Tank mit Spülflüssigkeit kann mittels eines steuerbaren Schaltventils beispielsweise mit der Saugseite der Flüssigkeitspumpe verbunden werden. Auf diese Weise kann das System beispielsweise mit Frischwasser gespült werden.

Eine dritte bevorzugte Ausführungsform der Erfindung ist dadurch gekennzeichnet, dass der Zirkulationskreislauf eine Zirkulationsleitung aufweist, die einerseits mit dem zweiten Schaltventil und andererseits mit dem Flüssigkeitstank verbunden ist, wobei mittels des zweiten Schaltventils eine Verbindung zwischen den Sprühdüsen und der Zirkulationsleitung geöffnet bzw. geschlossen werden kann und zwischen den Sprühdüsen und Mitteln zum Erzeugen eines Unterdruckes, insbesondere der Saugseite der Flüssigkeitspumpe, eine Rücklaufleitung sowie steuerbare Absperrmittel vorgesehen sind. Mittels des ersten Schaltventils kann die Druckleitung wahlweise mit einem zum Flüssigkeitstank führenden Gleichdruckkanal oder den Sprühdüsen verbunden werden.

Bei der Sprühvorrichtung gemäß dieser Ausführungsform wird die Flüssigkeit im Zirkulationsbetrieb somit von der Flüssigkeitspumpe in die Druckkammer befördert, gelangt von dort aus in den Gleichdruckkanal und über diesen zum Flüssigkeitstank. Über die Zirkulationsleitung wird Flüssigkeit aus dem Flüssigkeitstank angesaugt, gelangt in die Sammelkammer, vorbei an den Sprühdüsen sowie den steuerbaren Absperrmitteln in der Rücklaufleitung und über die Rücklaufleitung zur Saugseite der Flüssigkeitspumpe. Anstelle der Saugseite der Flüssigkeitspumpe kann beispielsweise auch eine Venturi-Düse oder eine Wasserstrahlpumpe eingesetzt und mit der Rücklaufleitung verbunden sein. Ein Tank mit Spülflüssigkeit kann über steuerbare Schaltventile beispielsweise mit der Zirkulationsleitung verbunden werden, um ein Spülen des Systems, beispielsweise mit Frischwasser, zu ermöglichen.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. In den Zeichnungen zeigen:
- Fig. 1a: eine erste bevorzugte Ausführungsform der Erfindung im Zirkulationsbetrieb,
- Fig. 1b: die Sprühvorrichtung der Fig. 1a im Sprühbetrieb,
- Fig. 2a: eine zweite bevorzugte Ausführungsform der Erfindung im Zirkulationsbetrieb,
- Fig. 2b: die Sprühvorrichtung der Fig. 2a im Sprühbetrieb,
- Fig. 3a: eine dritte bevorzugte Ausführungsform der Erfindung im Zirkulationsbetrieb und
- Fig. 3b: die Sprühvorrichtung der Fig. 3a im Sprühbetrieb.

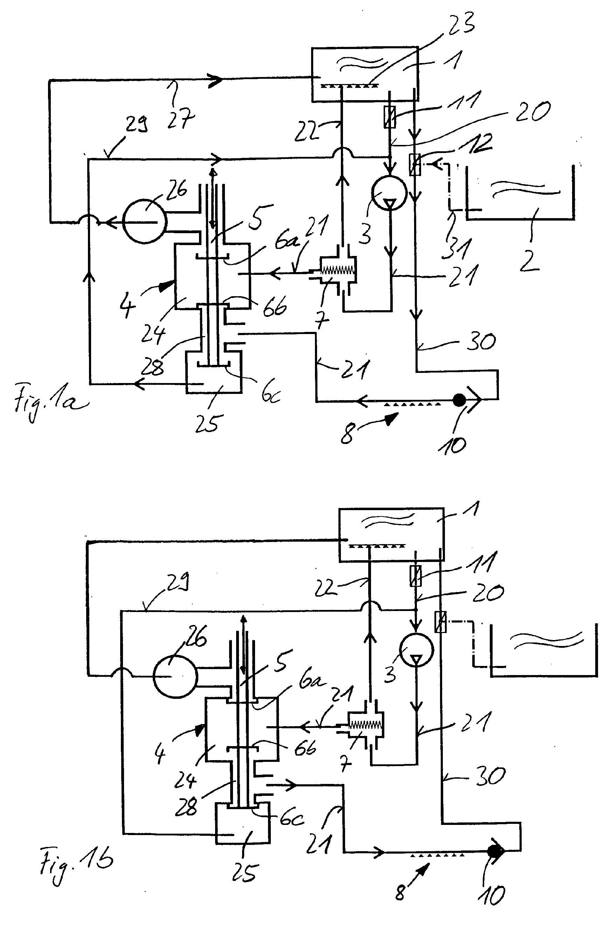

Die schematische Darstellung der Fig. 1a zeigt eine erfindungsgemäße Sprühvorrichtung gemäß einer ersten bevorzugten Ausführungsform im Zirkulationsbetrieb. Ein zu versprühendes flüssiges Medium, beispielsweise Pflanzenschutzmittel oder Flüssigdünger, befindet sich in einem Flüssigkeitstank 1. Zwischen dem Flüssigkeitstank 1 und einer Flüssigkeitspumpe 3 verläuft eine Saugleitung 20. In der Saugleitung 20 ist ein elektrisches oder mechanisches Absperrventil 11 angeordnet. Ausgehend von der Flüssigkeitspumpe 3 führt eine Druckleitung 21 zu einem Druckregler 7. Mittels des Druckreglers 7 erfolgt eine Druckregelung in der Druckleitung 21. Vom Druckregler 7 führt eine Entlastungsleitung 22 zu einem Rührwerk 23 im Tank 1. Das Rührwerk 23 rührt die Flüssigkeit im Flüssigkeitstank 1 auf und verhindert dadurch beispielsweise das Absetzen von Chemikalien. Ausgehend vom Druckregler 7 führt ein weiterer Abschnitt der Druckleitung 21 zu einem Ventil 4, das im folgenden als Teilbreitenventil 4 bezeichnet wird. Das Teilbreitenventil 4 weist vier Ein- bzw. Ausgänge auf. Eine Ventilstange 5 erstreckt sich abschnittsweise durch ein Gehäuse des Teilbreitenventils 4, und drei Ventilteller 6 sind an der Ventilstange 5 befestigt. Wie durch einen Doppelpfeil angedeutet ist, kann die Ventilstange 5 in der Fig. 1a in vertikaler Richtung verschoben werden, wodurch die Ventilteller 6 Strömungsöffnungen in dem Teilbreitenventil 4 freigeben oder verschließen.

Das Teilbreitenventil 4 weist eine Druckkammer 24 sowie eine Sammelkammer 25 auf. Ausgehend von der Druckkammer 24 kann Flüssigkeit, je nach Stellung der Ventilstange 5, entweder in einen Gleichdruckkanal 26 und von dort aus über eine Leitung 27 wieder in den Flüssigkeitstank 1 oder in einen Kanal 28 im Gehäuse des Teilbreitenventils 4 gelangen.

Vom Kanal 28 aus zweigt ein dritter Abschnitt der Druckleitung 21 zu Sprühdüsen 8 der Teilbreite ab. Der Kanal 28 mündet in der Sammelkammer 25. Die Mündung des Kanals 28 in die Sammelkammer 25 kann durch einen der Ventilteller 6 verschlossen werden. Ausgehend von der Sammelkammer 25 führt eine Zirkulationsleitung 29 zur Saugseite der Flüssigkeitspumpe 3. Die Sammelkammern 25 einzelner Teilbreitenventile können Bestandteil eines Sammelkanals oder Druckentlastungskanals sein.

Zwei der Ventilteller 6a, 6b sind innerhalb der Druckkammer 24 angeordnet, ein dritter Ventilteller 6c befindet sich in der Sammelkammer 25. Je nach Stellung der Ventilstange 5 öffnet oder verschließt ein erster Ventilteller 6a den Strömungsweg von der Druckkammer 24 zum Gleichdruckkanal 26. Ein zweiter Ventilteller 6b verschließt oder öffnet einen Strömungsweg von der Druckkammer 24 in den Kanal 28. Der dritte, in der Sammelkammer 25 angeordnete Ventilteller 6c öffnet bzw. verschließt einen Strömungsweg von dem Kanal 28 in die Sammelkammer 25. In der in der Fig. 1a dargestellten Stellung der Ventilstange 5 des Teilbreitenventils 4 ist ein Strömungsweg von der Druckkammer 24 zum Gleichdruckkanal 26 freigegeben, der Strömungsweg von der Druckkammer 24 in den Kanal 28 ist verschlossen und der Strömungsweg von dem Kanal 28 in die Sammelkammer 25 ist geöffnet.

Im Sprühbetrieb gelangt zu versprühende Flüssigkeit über den dritten Abschnitt der Druckleitung 21 vom Teilbreitenventil 4 zu den Sprühdüsen 8. Bezogen auf die Strömungsrichtung im Sprühbetrieb ist stromabwärts der Sprühdüsen 8 ein Rückschlagventil 10 angeordnet. An das Rückschlagventil 10 schließt sich eine Rücklaufleitung 30 an, die zum Flüssigkeitstank 1 führt.

In dem in der Fig. 1a dargestellten Zirkulationsbetrieb verschließt das Absperrventil 11 die Saugleitung zwischen Flüssigkeitstank 1 und Flüssigkeitspumpe 3. Infolgedessen saugt die Flüssigkeitspumpe 3 Flüssigkeit über die Zirkulationsleitung 29 an. Über die Sammelkammer 25, dem Kanal 28 und dem dritten Abschnitt der Druckleitung 21, die Sprühdüsen 8, das Rückschlagventil 10 und die Rücklaufleitung 30 steht die Zirkulationsleitung 29 in Verbindung mit dem Flüssigkeitstank 1. In dem Zirkulationsbetrieb der Fig. 1a wird die Rücklaufleitung 30 mit Unterdruck beaufschlagt und als sogenannte Rücksaugleitung betrieben. Wie in der Fig. 1a durch Pfeile angedeutet ist, wird somit Flüssigkeit aus dem Flüssigkeitstank 1 über die Rücklaufleitung 30 angesaugt, passiert das bei dieser Strömungsrichtung geöffnete Rückschlagventil 10 und die Sprühdüsen 8, passiert den dritten Abschnitt der Druckleitung 21, die Sammelkammer 25 und die Zirkulationsleitung 29. Von der Flüssigkeitspumpe 3 wird die angesaugte Flüssigkeit dann über den ersten Abschnitt der Druckleitung 21 zum Regler 7, den zweiten Abschnitt der Druckleitung 21 in die Druckkammer 24 und in den Gleichdruckkanal 26 gefördert. Vom Gleichdruckkanal 26 aus gelangt die Flüssigkeit im Zirkulationsbetrieb über die Leitung 27 wieder in den Flüssigkeitstank 1. Je nach Stellung des Reglers 7 gelangt auch im Zirkulationsbetrieb Flüssigkeit über die Entlastungsleitung 22 zum Rührwerk 23 und in den Flüssigkeitstank 1. Mit Ausnahme der durch das Absperrventil 11 geschlossenen Saugleitung 20 werden im Zirkulationsbetrieb somit alle Leitungen des Systems von Flüssigkeit durchströmt. Dadurch kann verhindert werden, dass sich eine Chemikalie im System absetzt, wenn keine Flüssigkeit über die Sprühdüsen 8 versprüht wird. Es ist dabei festzuhalten, dass die Sprühdüsen 8 in Teilbreiten angeordnet sind und jeder Teilbreite jeweils ein Teilbreitenventil 4 zugeordnet ist. Somit können auch einzelne Teilbreiten der Sprühdüsen 8 im Zirkulationsbetrieb betrieben werden, auch wenn andere Teilbreiten noch im Sprühbetrieb gefahren werden.

Die in der Fig. 1a gezeigte Sprühvorrichtung weist darüber hinaus einen Spülflüssigkeitstank 2 auf, der üblicherweise mit Frischwasser gefüllt ist.

Dieser Frischwassertank 2 kann über eine Leitung 31 und ein elektrisches oder mechanisches Absperrventil 12 wahlweise mit der Rücklaufleitung 30 verbunden werden. Ist das Absperrventil 12 so geschaltet, dass die Leitung 31 mit der Rücklaufleitung 30 verbunden ist, ist gleichzeitig die Verbindung der Rücklaufleitung 30 zum Flüssigkeitstank 1 gesperrt. Infolgedessen wird im Zirkulationsbetrieb dann Frischwasser aus dem Frischwassertank 2 über die Rücklaufleitung 30 angesaugt und vorbei an dem geöffneten Rückschlagventil 10 und den Sprühdüsen 8 über die Sammelkammer 25 in die Zirkulationsleitung 29 und zur Flüssigkeitspumpe 3 gesaugt. Wie bereits beschrieben, gelangt die Flüssigkeit, in diesem Fall Frischwasser, dann über den Regler 7 entweder über die Entlastungsleitung 22 und das Rührwerk 23 in den Flüssigkeitstank 1 oder über den zweiten Abschnitt der Druckleitung 21 in die Druckkammer 24, den Gleichdruckkanal 26 und über die Leitung 27 wieder in den Flüssigkeitstank 1. Somit kann, beispielsweise am Ende eines Arbeitstages oder dann, wenn vom Versprühen von Pflanzenschutzmittel auf Flüssigdünger umgestellt werden soll, die erfindungsgemäße Sprühvorrichtung mit Frischwasser gespült werden, so dass verhindert wird, dass beispielsweise Pflanzenschutzmittel im System verbleibt und das nachfolgende Versprühen von Flüssigdünger beeinträchtigt. Bei herkömmlichen Sprühvorrichtungen wurde dieses Problem dadurch gelöst, dass nach dem Wechsel der Flüssigkeit im Flüssigkeitstank 1 zunächst die Sprühvorrichtung für eine gewisse Zeit und noch vor dem Befahren eines Feldes aktiviert wurde, um sicherzustellen, dass beim Befahren des Feldes lediglich die zuletzt in den Flüssigkeitstank 1 eingefüllte Chemikalie versprüht wird.

Die Stellung der Ventilstange 5 des Teilbreitenventils 4 bei der in der Fig. 1a dargestellten erfindungsgemäßen Sprühvorrichtung entspricht dem Zustand "Teilbreite aus" bei einem normalen Ventil im abgeschalteten Zustand. Festzustellen ist, dass sich bei der Sprühvorrichtung der Fig. 1a der Gleichdruck über den Druckregler 7 normal einstellen lässt und die umgeleitete Menge wie üblich zurück in den Flüssigkeitstank 1 oder das Fass geht. Die Funktion des Druckreglers 7 ist dabei von der Zirkulation unbeeinflusst. Insbesondere kann auch im Zirkulationsbetrieb auf eine pneumatische Druckregelung, beispielsweise ein Ramsay-Ventil verzichtet werden. Wie ausgeführt wurde, kann durch Zuschalten des Frischwassertanks 2 das System bei Bedarf gespült werden. Dabei werden Flüssigkeitspumpe 3, Druckregler 7, Teilbreitenventil 4 sowie die Düsenleitung gespült.

Die schematische Darstellung der Fig. 1b zeigt die Sprühvorrichtung der Fig. 1a im Sprühbetrieb. Dieser Zustand wird auch als "Teilbreite ein" bezeichnet. Durch das Schließen des in der Fig. 1b unteren, dritten Ventiltellers 6c ist die Verbindung der Zirkulationsleitung 29 zum Düsenstrang 8 unterbrochen, und es kann von der Flüssigkeitspumpe 3 keine Chemikalie zurückgesaugt werden. Der Überdruck im Düsenstrang verschließt das Rückschlagventil 10. Somit ist das Zirkulationssystem stillgelegt. Das Teilbreitenventil 4 und der Druckregler 7 verhalten sich wie bei einem konventionellen Sprühsystem.

Im einzelnen ist im Sprühbetrieb das Absperrventil 11 geöffnet, so dass die Flüssigkeitspumpe 3 über die Saugleitung 20 Flüssigkeit aus dem Flüssigkeitstank 1 ansaugen kann. Aus der Zirkulationsleitung 29 wird dabei keine Flüssigkeit angesaugt, da durch den dritten Ventilteller 6c die Verbindung der Sammelkammer 25 zum Kanal 28 und somit zu den Sprühdüsen 8 verschlossen ist. Von der Flüssigkeitspumpe 3 aus wird die Flüssigkeit über den ersten Abschnitt der Druckleitung 21 zum Druckregler 7 und von dort aus über den zweiten Abschnitt der Druckleitung 21 in die Druckkammer 24 des Teilbreitenventils 4 oder über die Entlastungsleitung 22 zum Rührwerk 23 gefördert. Die Ventilstange 5 ist gegenüber der in der Fig. 1a gezeigten Stellung nach oben verschoben, so dass der erste Ventilteller 6a die Strömungsverbindung von der Druckkammer 24 zum Gleichdruckkanal 26 verschließt und der zweite Ventilteller 6b die Strömungsverbindung von der Druckkammer 24 zum Kanal 28 öffnet. Wie bereits beschrieben, hält der dritte Ventilteller 6c die Verbindung vom Kanal 28 zur Sammelkammer 25 geschlossen. Die Flüssigkeit gelangt von der Druckkammer 24 somit über den Kanal 28 und in den dritten Abschnitt der Druckleitung 21 und somit zu den Sprühdüsen 8. Bei dieser Strömungsrichtung in der Druckleitung 21, die zur Strömungsrichtung im Zirkulationsbetrieb gegenläufig ist, ist das Rückschlagventil 10 verschlossen. Die von der Flüssigkeitspumpe 3 aus dem Flüssigkeitstank 1 geförderte Flüssigkeit wird somit über die Sprühdüsen 8 versprüht.

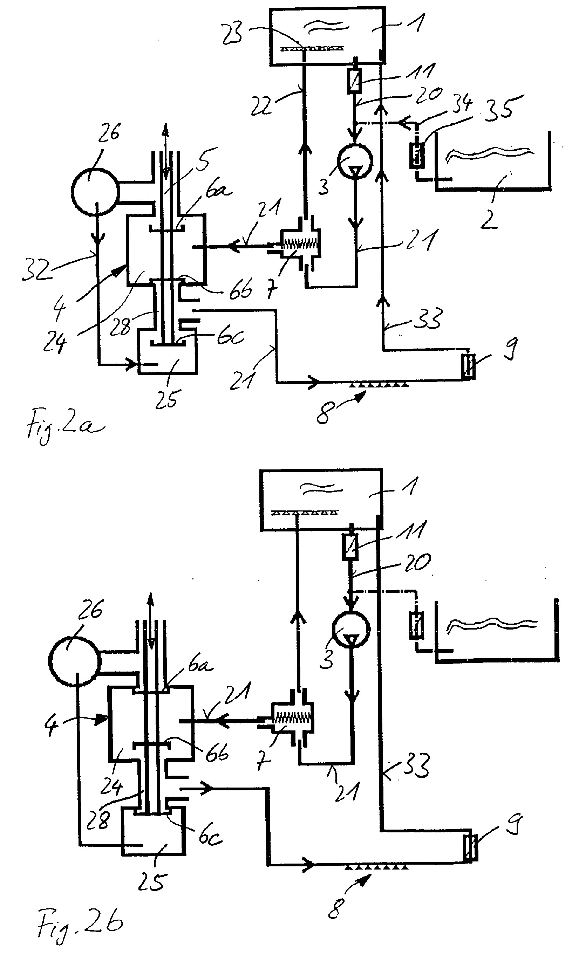

In der Fig. 2a ist eine zweite bevorzugte Ausführungsform der erfindungsgemäßen Sprühvorrichtung schematisch dargestellt. Zu der Sprühvorrichtung der Fig. 1 baugleiche Elemente sind mit den gleichen Bezugsziffern bezeichnet und werden nicht erneut gesondert beschrieben. Ein wesentlicher Unterschied zu der in der Fig. 1a und 1b gezeigten Sprühvorrichtung besteht bei der Sprühvorrichtung der Fig. 2a und 2b darin, dass gegenüber dem Sprühbetrieb im Zirkulationsbetrieb die Strömungsrichtung nicht umgekehrt wird. Darüber hinaus wird im Zirkulationsbetrieb die Flüssigkeit nicht an den Sprühdüsen 8 vorbeigesaugt. Vielmehr steht die Flüssigkeit auch im Zirkulationsbetrieb im Bereich der Sprühdüsen 8 unter Druck, wobei dieser Druck im Zirkulationsbetrieb allerdings unter dem Öffnungsdruck der Sprühdüsen 8 liegt.

In der Darstellung der Fig. 2a befindet sich die erfindungsgemäße Sprühvorrichtung im Zustand "Teilbreite aus", so dass keine Flüssigkeit über die Sprühdüsen 8 der Teilbreite versprüht wird. Hierzu wird das Teilbreitenventil 4 ausgeschaltet. Das elektrische Absperrventil 9 in der Düsenleitung wird auf "ein", entsprechend Durchfluss, geschaltet. Die Chemikalie wird somit vom Regler 7 kommend durch das Teilbreitenventil 4, den Gleichdruckkanal 26 und durch den Druckentlastungskanal oder Sammelkanal 25 über die Düsenleitung zurück in das Fass oder den Flüssigkeitstank 1 gefördert. Die Chemikalie zirkuliert somit im Düsenstrang. Das System funktioniert dann, wenn der Druck im Rücklauf geringer ist als der Öffnungsdruck der Tropfstoppmembranen in den Sprühdüsen 8. Die Funktion bzw. Stellung des Teilbreitenventils 4 entspricht der eines normalen Ventils im abgeschalteten Zustand. Der Gleichdruck lässt sich über den Regler 7 normal einstellen. Die Funktion des Druckreglers 7 ist von der Zirkulation unbeeinflusst. Bei Bedarf kann durch Zuschaltung des Frischwassertanks 2 das System gespült werden. Hierbei werden Flüssigkeitspumpe 3, Druckregler 7, Teilbreitenventil 4 und die Düsenleitung gespült.

Im einzelnen wird im Zirkulationsbetrieb Flüssigkeit aus dem Flüssigkeitstank 1 über das geöffnete Absperrventil 11 und die Saugleitung 20 von der Flüssigkeitspumpe 3 angesaugt. Von der Flüssigkeitspumpe 3 wird die angesaugte Flüssigkeit dann über den ersten Abschnitt der Druckleitung 21 zum Regler 7 und von dort aus über den zweiten Abschnitt der Druckleitung 21 in die Druckkammer 24 des Teilbreitenventils 4 gefördert. Je nach Einstellung des Reglers kann Flüssigkeit ausgehend vom Druckregler 7 auch über die Entlastungsleitung 22 zum Rührwerk 23 im Flüssigkeitstank 1 gelangen. In der dargestellten Stellung der Ventilstange 5 öffnet der erste Ventilteller 6a eine Verbindung von der Druckkammer 24 zum Gleichdruckkanal 26. Der zweite Ventilteller 6b verschließt die Strömungsverbindung von der Druckkammer 24 in den Kanal 28. Eine Zirkulationsleitung 32 verbindet den Gleichdruckkanal 26 und den Druckentlastungskanal oder die Sammelkammer 25. Der dritte Ventilteller 6c ist so angeordnet, dass er die Strömungsverbindung von der Sammelkammer 25 zum Kanal 28 öffnet. Aus der Druckkammer 24 gelangt Flüssigkeit somit in den Gleichdruckkanal 26, die Zirkulationsleitung 32, in die Sammelkammer 25 und über den Kanal 28 in den dritten Abschnitt der Druckleitung 21 und zu den Sprühdüsen 8. Vorbei an den Sprühdüsen 8 wird die Flüssigkeit über das geöffnete Absperrventil 9 und eine Rücklaufleitung 33 zurück in den Flüssigkeitstank 1 gefördert.

Wie bereits ausgeführt wurde, liegt im Zirkulationsbetrieb der Flüssigkeitsdruck an den Sprühdüsen 8 unterhalb des Öffnungsdrucks der Tropfstoppmembranen in den Sprühdüsen 8. Um dies zu gewährleisten, kann im Bereich des Gleichdruckkanals 26 und/oder im Bereich der Sammelkammer 25 eine Drossel zur Druckabsenkung vorgesehen sein. Eine Drossel zur Druckabsenkung kann zweckmäßigerweise auch in die Zirkulationsleitung 32 integriert sein.

Bei Bedarf kann durch Zuschaltung des Frischwassertanks 2 die erfindungsgemäße Sprühvorrichtung gespült werden. Hierzu wird die Saugleitung 20 mittels des Absperrventils 11 verschlossen und der Frischwassertank über eine Leitung 34 und ein Absperrventil 35 mit der Saugseite der Flüssigkeitspumpe 3 verbunden. Die Flüssigkeitspumpe 3 saugt dann Frischwasser aus dem Frischwassertank 2 an und befördert dieses durch das System.

In der Darstellung der Fig. 2b ist die Sprühvorrichtung der Fig. 2a im Sprühbetrieb dargestellt, der auch als "Teilbreite ein" bezeichnet wird. Durch das Schließen des unteren Dichtungstellers 6c ist die Verbindung vom Gleichdruckkanal 26 zum Düsenstrang mit den Sprühdüsen 8 unterbrochen. Wenn das elektrische Abschaltventil 9 ausgeschaltet wird, ist das Zirkulationssystem stillgelegt. Das Teilbreitenventil 4 und der Druckregler 7 verhalten sich wie in einem konventionellen Sprühsystem.

Im einzelnen ist im Sprühbetrieb das Absperrventil 11 geöffnet, so dass die Flüssigkeitspumpe 3 über die Saugleitung 20 Flüssigkeit aus dem Flüssigkeitstank 1 ansaugt. Die Flüssigkeitspumpe 3 fördert die Flüssigkeit über den ersten Abschnitt der Druckleitung 21 zum Druckregler 7 und über den zweiten Abschnitt der Druckleitung 21 in die Druckkammer 24 des Teilbreitenventils 4. Die Ventilstange 5 ist gegenüber der Stellung der Fig. 2a nach oben verschoben, so dass der erste Ventilteller 6a die Verbindung von der Druckkammer 24 zum Gleichdruckkanal 26 verschließt. Der zweite Ventilteller 6b öffnet dahingegen die Verbindung von der Druckkammer 24 zum Kanal 28. Der dritte Ventilteller 6c verschließt die Verbindung vom Kanal 28 zur Sammelkammer 25. Infolgedessen gelangt Flüssigkeit von der Druckkammer 24 über den Kanal 28 in den dritten Abschnitt der Druckleitung 21 und zu den Sprühdüsen 8. Da das elektrische Abschaltventil 9 verschlossen ist, kann sich der zum Öffnen der Tropfstoppmembranen der Sprühdüsen 8 erforderliche Druck an den Sprühdüsen 8 aufbauen, und die Flüssigkeit aus dem Flüssigkeitstank 1 wird über die Sprühdüsen 8 versprüht.

Wie bereits in Bezug auf das System der Fig. 1a und 1b ausgeführt wurde, kann mittels der dargestellten erfindungsgemäßen Sprühvorrichtung eine einzelne Teilbreite abgestellt und vom Sprühbetrieb in den Zirkulationsbetrieb überführt werden, wohingehen weitere Teilbreiten im Sprühbetrieb verbleiben können.

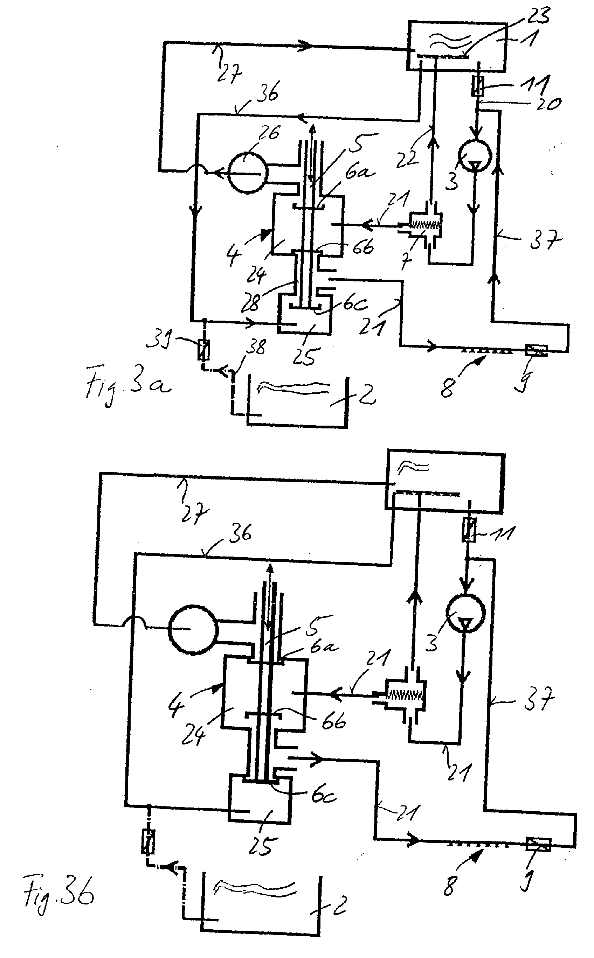

In der Darstellung der Fig. 3a ist schematisch eine dritte bevorzugte Ausführungsform der erfindungsgemäßen Sprühvorrichtung dargestellt. Zur Darstellung der Fig. 1a baugleiche Elemente sind mit den gleichen Bezugsziffern bezeichnet und werden nicht gesondert erläutert. Ein wesentlicher Unterschied zu der in den Fig. 1a und 1b dargestellten Sprühvorrichtung besteht darin, dass die Strömungsrichtung im Bereich der Sprühdüsen 8 im Zirkulationsbetrieb gleichläufig ist zu der Strömungsrichtung im Sprühbetrieb. Bezüglich der in den Fig. 1a und 1b dargestellten Sprühvorrichtung erfolgt bei der in den Fig. 3a und 3b dargestellten Sprühvorrichtung eine Zirkulation somit in der Gegenrichtung.

Im Unterschied zu dem in den Fig. 1a und 1b dargestellten System ist eine Zirkulationsleitung 36 einerseits mit dem Flüssigkeitstank 1 und andererseits mit der Sammelkammer 25 verbunden. Eine Rücklaufleitung 37 ist einerseits mit den Sprühdüsen 8 und andererseits mit der Saugseite der Flüssigkeitspumpe 3 verbunden. In dem in der Fig. 3a dargestellten Zirkulationsbetrieb ist das Absperrventil 11 geschlossen, so dass die Flüssigkeitspumpe 3 über die Saugleitung 20 keine Flüssigkeit aus dem Flüssigkeitstank 1 ansaugen kann. Infolgedessen entsteht in der Rücklaufleitung 37 ein Unterdruck. Das elektrische Abschaltventil 9 zwischen den Sprühdüsen 8 und der Rücklaufleitung 37 ist geöffnet. Am Teilbreitenventil 4 ist durch den dritten Ventilteller 6c die Verbindung zwischen der Sammelkammer 25 und dem dritten Abschnitt der Druckleitung 21 zwischen Teilbreitenventil 4 und Sprühdüsen 8 geöffnet. Da die Zirkulationsleitung 36 einerseits mit dem Flüssigkeitstank 1 und andererseits mit der Sammelkammer 25 verbunden ist, wird im Zirkulationsbetrieb über die Zirkulationsleitung 36 Flüssigkeit aus dem Flüssigkeitstank 1 angesaugt, durch die Sammelkammer 25 und den dritten Abschnitt der Druckleitung 21 vorbei an den Sprühdüsen 8 und durch die Rücklaufleitung 37 gesaugt. Nach Passieren der Flüssigkeitspumpe 3 wird die Flüssigkeit über den ersten Abschnitt der Druckleitung 21 zum Druckregler 7 und entweder über die Entlastungsleitung 22 in den Flüssigkeitstank 1 oder in die. Druckkammer 24 des Teilbreitenventils 4 befördert. Die Ventilstange 5 ist so eingestellt, dass der erste Ventilteller 6a eine Verbindung von der Druckkammer 24 zum Gleichdruckkanal 26 öffnet und der zweite Ventilteller 6b eine Verbindung von der Druckkammer 24 zum Kanal 28 verschließt. Von der Druckkammer 24 gelangt die Flüssigkeit somit über den Gleichdruckkanal 26 und die Leitung 27 zurück in den Flüssigkeitstank 1.
Bei Bedarf kann das in der Fig. 3a gezeigte System mit Frischwasser aus dem Frischwassertank 2 gespült werden. Der Frischwassertank 2 ist über eine Leitung 38 mit der Zirkulationsleitung 36 verbunden. Die Leitung 38 kann mittels eines elektrischen Abschaltventils 39 gesperrt werden. Zweckmäßigerweise kann mittels des Absperrventils 39 oder eines weiteren Absperrventils in der Zirkulationsleitung 36 diese für den Spülbetrieb gesperrt werden. Im Spülbetrieb wird über die Leitung 38 somit Frischwasser aus dem Frischwassertank 2 angesaugt, gelangt über die Sammelkammer 25 und den dritten Abschnitt der Druckleitung 21 zu den Sprühdüsen 8, in die Rücklaufleitung 37 und zur Flüssigkeitspumpe 3. Von dort aus wird das Frischwasser, wie zuvor für den Zirkulationsbetrieb beschrieben, über das Teilbreitenventil 4 und die Leitung 27 in den Flüssigkeitstank 1 gefördert.
Die Darstellung der Fig. 3b zeigt das in der Fig. 3a gezeigte System im Sprühbetrieb. Wie bei den in den Fig. 1a, 1b, 2a und 2b gezeigten Systemen kann bei dem System der Fig. 3a und 3b eine einzelne Teilbreite ein- bzw. abgeschaltet und in den Zirkulationsbetrieb überführt werden. Der in der Fig. 3b dargestellte Zustand wird als "Teilbreite ein" bezeichnet. Im Sprühbetrieb ist das Abschaltventil 11 geöffnet und das Abschaltventil 9 gesperrt, so dass die Flüssigkeitspumpe 3 Flüssigkeit aus dem Flüssigkeitstank 1, nicht aber aus der Rücksaugleitung 37 ansaugt. Über die Druckleitung 21 und den Druckregler 7 gelangt die Flüssigkeit zum Teilbreitenventil 4 oder zum Rührwerk 23 im Flüssigkeitstank 1. Die Ventilstange 5 nimmt eine gegenüber der in der Fig. 3a gezeigten Stellung nach oben verschobene Stellung ein, so dass der erste Ventilteller 6a die Verbindung von der Druckkammer 24 zum Gleichdruckkanal 26 verschließt, der zweite Ventilteller 6b die Verbindung von der Druckkammer 24 zum Kanal 28 öffnet und der dritte Ventilteller 6c die Verbindung vom Kanal 28 zur Sammelkammer 25 verschließt. Infolgedessen wird die Flüssigkeit von der Flüssigkeitspumpe 3 über den dritten Abschnitt der Druckleitung 21 zu den Sprühdüsen 8 gedrückt, und da das Absperrventil 9 geschlossen ist, tritt die Flüssigkeit aus den Sprühdüsen 8 aus. Anstelle eines Absperrventils für jede Teilbreite der Sprühdüsen 8 kann auch ein gemeinsames Absperrventil in einer gemeinsamen Leitung vorgesehen sein, an der alle Teilbreiten zusammengefasst sind.

Bezüglich des in den Fig. 2a, 2b, 3a und 3b gezeigten Sprühvorrichtungen ist festzustellen, dass die Entlastungsleitung 22 anstelle zum Rührwerk 23 und in den Flüssigkeitstank 1 auch in die Saugleitung 20 vor der Flüssigkeitspumpe 3 münden kann.

## Patentansprüche

1. Sprühvorrichtung zum Ausbringen flüssiger Medien für die Landwirtschaft mit einer Flüssigkeitspumpe (3), einer von der Flüssigkeitspumpe (3) ausgehenden Druckleitung (21), mehreren in Teilbreiten angeordneten Sprühdüsen (18), wobei jeder Teilbreite der Sprühdüsen (8) wenigstens ein erstes Schaltventil zum Verbinden der Sprühdüsen (8) mit der Druckleitung (21) zugeordnet ist, einem Zirkulationskreislauf und wenigstens einem zweiten Schaltventil zum Umschalten der Sprühvorrichtung vom Sprühbetrieb in den Zirkulationsbetrieb,
**dadurch gekennzeichnet, dass**
jedem ersten Schaltventil eines der zweiten Schaltventile zugeordnet ist und jedes erste Schaltventil und das jeweilige zugeordnete zweite Schaltventil mittels einer gemeinsamen Ventilstange (5) synchron betätigbar sind.

2. Sprühvorrichtung nach Anspruch 1, **dadurch gekennzeichnet, dass** jedes erste Schaltventil und das jeweilige zugeordnete zweite Schaltventil zu einem Teilbreitenventil (4) mit einem gemeinsamen Gehäuse verbunden sind, wobei sich die gemeinsame Ventilstange (5) wenigstens abschnittsweise durch das Gehäuse erstreckt und mit Absperrelementen (6a, 6b, 6c) versehen ist, die in passende Sitze in dem Gehäuse eingreifen können.

3. Sprühvorrichtung nach Anspruch 2, **dadurch gekennzeichnet, dass** das Gehäuse eine Druckkammer (24), an die die Druckleitung (21) angeschlossen ist, und eine Sammelkammer (25) aufweist, an die eine Zirkulationsleitung (29; 32; 36) angeschlossen ist, wobei mittels eines zweiten Absperrelements (6b) eine Verbindung von der Druckkammer (24) zu den Sprühdüsen (8) geschlossen bzw. geöffnet werden kann und mittels eines dritten Absperrelements (6c) eine Verbindung von der Sammelkammer (25) zu den Sprühdüsen (8) geöffnet bzw. geschlossen werden kann.

4. Sprühvorrichtung nach Anspruch 3, **dadurch gekennzeichnet, dass** mittels eines ersten Absperrelements (6a) eine Verbindung von der Druckkammer (24) zu einem Flüssigkeitstank (1) oder der Zirkulationsleitung (32) geöffnet bzw. geschlossen werden kann.

5. Sprühvorrichtung nach einem der vorstehenden Ansprüche, **dadurch gekennzeichnet, dass** in Bezug auf eine Strömungsrichtung im Sprühbetrieb stromabwärts der Sprühdüsen (8) eine Rücklaufleitung (30; 33; 37) einerseits mit den Sprühdüsen (8) und andererseits mit einem Flüssigkeitstank (1) oder Mitteln zum Erzeugen eines Unterdrucks, insbesondere einer Saugseite der Flüssigkeitspumpe (3), verbunden ist.

6. Sprühvorrichtung nach einem der vorstehenden Ansprüche, **dadurch gekennzeichnet, dass** in der Rücklaufleitung (30; 33; 37) steuerbare Absperrmittel (10; 9) vorgesehen sind.

7. Sprühvorrichtung nach Anspruch 5 oder 6, **dadurch gekennzeichnet, dass** der Zirkulationskreislauf die Rücklaufleitung (30; 33; 37) und wenigstens einen Abschnitt der Druckleitung (21) zwischen Teilbreitenventil (4) und Sprühdüsen (8) aufweist.

8. Sprühvorrichtung nach Anspruch 7, **dadurch gekennzeichnet, dass** der Zirkulationskreislauf die Druckleitung (21) zwischen Flüssigkeitspumpe (3) und Teilbreitenventil (4) aufweist.

9. Sprühvorrichtung nach einem der vorstehenden Ansprüche, **dadurch gekennzeichnet, dass** im Zirkulationskreislauf Drosselmittel vorgesehen sind, um einen Flüssigkeitsdruck im Zirkulationsbetrieb unter einen Öffnungsdruck der Sprühdüsen (8) abzusenken.

10. Sprühvorrichtung nach einem der Ansprüche 1 bis 9, **dadurch gekennzeichnet, dass** der Zirkulationskreislauf eine Zirkulationsleitung (29) aufweist, die einerseits mit Mitteln zum Erzeugen eines Unterdrucks, insbesondere einer Saugseite der Flüssigkeitspumpe (3), und andererseits mit dem zweiten Schaltventil verbunden ist und mittels des zweiten Schaltventils wahlweise absperrbar oder mit den Sprühdüsen (8) verbindbar ist, wobei zwischen den Sprühdüsen (8) und einem Flüssigkeitstank (1) eine Rücklaufleitung (30) sowie steuerbare Absperrmittel (10) vorgesehen sind.

11. Sprühvorrichtung nach Anspruch 10, **dadurch gekennzeichnet, dass** mittels des ersten Schaltventils die Druckleitung (21) wahlweise mit dem Flüssigkeitstank (1) verbundenen Gleichdruckkanal (26) oder den Sprühdüsen (8) verbindbar ist.

12. Sprühvorrichtung nach einem der Ansprüche 1 bis 9, **dadurch gekennzeichnet, dass** der Zirkulationskreislauf eine Zirkulationsleitung (32) aufweist, die einerseits mit dem ersten Schaltventil und andererseits dem zweiten Schaltventil verbunden ist, wobei mittels des ersten Schaltventils eine Verbindung zwischen der Druckleitung (21) und der Zirkulationsleitung (32) geöffnet bzw. geschlossen werden kann und mittels des zweiten Schaltventils eine Verbindung zwischen der Zirkulationsleitung (32) und den Sprühdüsen (8) geöffnet bzw. geschlossen werden kann und wobei zwischen den Sprühdüsen (8) und einem Flüssigkeitstank (1) eine Rücklaufleitung (33) sowie steuerbare Absperrmittel (9) vorgesehen sind.

13. Sprühvorrichtung nach Anspruch 12, **dadurch gekennzeichnet, dass** mittels des ersten Schaltventils die Druckleitung (21) wahlweise mit der Zirkulationsleitung (32) oder den Sprühdüsen (8) verbindbar ist.

14. Sprühvorrichtung nach Anspruch 12 oder 13, **dadurch gekennzeichnet, dass** in der Zirkulationsleitung Drosselmittel vorgesehen sind, um im Zirkulationsbetrieb einen Flüssigkeitsdruck im Zirkulationskreislauf unter einen Öffnungsdruck der Sprühdüsen abzusenken.

15. Sprühvorrichtung nach einem der Ansprüche 1 bis 9, **dadurch gekennzeichnet, dass** der Zirkulationskreislauf (32) eine Zirkulationsleitung (36) aufweist, die einerseits mit dem zweiten Schaltventil und andererseits mit dem Flüssigkeitstank (1) verbunden ist, wobei mittels des zweiten Schaltventils eine Verbindung zwischen den Sprühdüsen (8) und der Zirkulationsleitung (36) geöffnet bzw. geschlossen werden kann, und zwischen den Sprühdüsen (8) und Mitteln zum Erzeugen eines Unterdruckes, insbesondere der Saugseite der Flüssigkeitspumpe (3), eine Rücklaufleitung (37) sowie steuerbare Absperrmittel (9) vorgesehen sind.

16. Sprühvorrichtung nach Anspruch 15, **dadurch gekennzeichnet, dass** mittels des ersten Schaltventils die Druckleitung (21) wahlweise mit dem mit dem Flüssigkeitstank (1) verbundenen Gleichdruckkanal (26) oder den Sprühdüsen (8) verbunden werden kann.
